(19) Europäisches Patentamt
European Patent Office
Office européen des brevets

(11) **EP 1 019 646 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.⁷: **F16H 61/02**
// F16H59:72

(21) Anmeldenummer: **98950084.8**

(22) Anmeldetag: **28.09.1998**

(86) Internationale Anmeldenummer:
**PCT/EP98/06128**

(87) Internationale Veröffentlichungsnummer:
**WO 99/18371 (15.04.1999 Gazette 1999/15)**

(54) **VERFAHREN ZUM STEUERN EINES AUTOMATGETRIEBES**

METHOD FOR CONTROLLING AN AUTOMATIC TRANSMISSION

PROCEDE DE COMMANDE D'UNE BOITE DE VITESSES AUTOMATIQUE

(84) Benannte Vertragsstaaten:
**DE FR GB SE**

(30) Priorität: **02.10.1997 DE 19743743**

(43) Veröffentlichungstag der Anmeldung:
**19.07.2000 Patentblatt 2000/29**

(73) Patentinhaber: **ZF FRIEDRICHSHAFEN Aktiengesellschaft**
**88038 Friedrichshafen (DE)**

(72) Erfinder:
• **ESCHRICH, Gerhard**
**D-88069 Tettnang (DE)**
• **SCHMID, Wolfgang**
**D-88085 Langenargen (DE)**

(56) Entgegenhaltungen:
EP-A- 0 479 464          WO-A-98/01659
WO-A-99/15815          DE-A- 3 928 814
DE-A- 4 332 456          US-A- 4 907 475
US-A- 5 069 084          US-A- 5 319 963

• PATENT ABSTRACTS OF JAPAN vol. 006, no. 106 (M-213), 10. Mai 1983 & JP 58 028049 A (TOYOTA JIDOSHA KOGYO KK), 18. Februar 1983

**Beschreibung**

Die Erfindung betrifft ein Verfahren zum Steuern eines von einer Brennkraftmaschine angetriebenen Automatgetriebes, bei dem eine elektronische Getriebesteuerung bei Vorliegen einer Kaltstart-Bedingung ein Warmlaufschaltkennfeld auswählt oder nur diejenigen Schaltkennfelder mit höheren Schaltpunkten zuläßt.

Bei der Antriebsanordnung Brennkraftmaschine/Automatgetriebe wird üblicherweise die Brennkraftmaschine als auch das Automatgetriebe von einem eigenen elektronischen Steuergerät gesteuert. Während der Initialisierungsphase, d. h. wenn ein Fahrer das Fahrzeug beabsichtigt zu starten, stellt das elektronische Motorsteuergerät via Datenleitung der elektronischen Getriebesteuerung die Kühlerwassertemperatur der Brennkraftmaschine zur Verfügung. Anhand dieser Information prüft die elektronische Getriebesteuerung, ob eine Kaltstartbedingung vorliegt. Bei Vorliegen der Kaltstartbedingung wählt sodann die elektronische Getriebesteuerung ein sogenanntes Warmlaufprogramm aus oder läßt nur diejenigen Schaltprogramme, welche höhere Schaltpunkte aufweisen. Durch die höheren Schaltpunkte wird bewirkt, daß die Brennkraftmaschine und der Katalysator sich schneller erwärmen und die Betriebstemperatur früher erreichen.

Die DE-OS 39 28 814 schlägt vor, daß nach Ablauf einer Zeitstufe das Warmlaufschaltprogramm beendet ist. Der genannte Stand der Technik weist den Nachteil auf, daß der tatsächlich vorliegende Betriebszustand der Brennkraftmaschine nicht berücksichtigt ist. Wird z. B. das Fahrzeug vor Ablauf der Zeitstufe angehalten und nach kurzer Zeit wieder angelassen, so beginnt die Zeitstufe, erneut in voller Länge zu laufen.

In der gattungsbildende US5319963 A ist ein mathematisches Verfahren bekanntgeworden, um die Getriebeöltemperatur voraus zu berechnen, so dass kein Getriebeöltemperatursensor erforderlich ist. Hierzu werden die Wärmeströme im Drehmomentwandler, im Getriebe, im Kühler und der Wärmestrom der Konvektion berechnet. Unter Berücksichtigung einer geschätzten, spezifischen Wärmekapizität des Komplettgetriebes ergibt sich eine Abschätzung der tatsächlichen Getriebeöltemperatur, anhand der ein "hot-mode" und ein "cold-mode" für die Schaltpunktsteuerung von Gangstufen und Wandlerüberbrückungskupplung steuerbar ist.

Die der Erfindung zugrunde liegende Aufgabe besteht nunmehr darin, das Ende des Warmlaufprogramms an den tatsächlichen Zustand der Brennkraftmaschine zu koppeln.

Die Aufgabe wird erfindungsgemäß gelöst, indem die elektronische Getriebesteuerung aus dem von der Brennkraftmaschine abgegebenen Moment und dessen Drehzahl einen aktuellen Leistungswert berechnet. Danach wird der Energiedurchsatz berechnet, indem die aktuellen Leistungswerte über der Zeit summiert werden. Die elektronische Getriebesteuerung deaktiviert das Warmlaufschaltkennfeld bzw. läßt diejenigen Schaltkennfelder mit niedrigen Schaltpunkten wieder zu, wenn der Energiedurchsatz einen Grenzwert überschreitet.

Durch die erfindungsgemäße Lösung wird der Vorteil erzielt, daß ohne Verschlechterung des Abgasverhaltens auf das Normalprogramm umgeschaltet werden kann. Da bei einem normalen Straßenbetrieb des Fahrzeugs ein deutlich höherer Energiedurchsatz stattfindet als im Abgastest, bedeutet dies, daß das Warmlaufprogramm wesentlich früher verlassen werden kann.

Ein weiterer Vorteil ist darin zu sehen, daß die erfindungsgemäße Lösung eine reine Software-Lösung darstellt und somit ohne wesentlichen Aufwand, wie etwa Hardware-Änderungen, in eine bereits bestehende Software einer elektronischen Getriebesteuerung eingebunden werden kann.

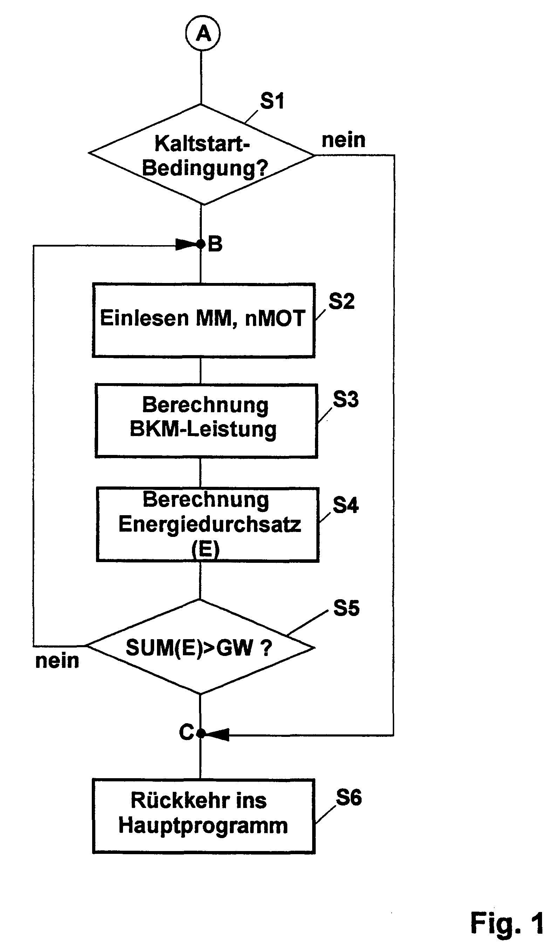

In der einzigen Figur ist ein bevorzugtes Ausführungsbeispiel dargestellt. Der Programmablauf kann als Unterprogramm in eine bestehende Getriebesteuerungs-Software eingebunden sein. Der Programmablauf beginnt beim Punkt A. Im Schritt S1 wird geprüft, ob eine Kaltstart-Bedingung vorliegt. Bei negativem Ergebnis der Abfrage S1, d. h., die Brennkraftmaschine hat Betriebstemperatur, wird ins Hauptprogramm S6 zurückgekehrt. Eine Kaltstart-Bedingung liegt z. B. dann vor, wenn die Temperatur des Kühlwassers der Brennkraftmaschine unterhalb einem Grenzwert, z. B. 35 °C, liegt. Selbstverständlich kann anstatt der Temperatur des Kühlwasser der Brennkraftmaschine auch die Temperatur des ATF (Automatic Transmission Fluid) des Automatgetriebes verwendet werden. Bei Vorliegen der Kaltstart-Bedingung liest die elektronische Getriebesteuerung im Schritt S2 das aktuelle Motormoment MM und die aktuelle Drehzahl der Brennkraftmaschine nMOT ein. Die beiden Datenwerte werden üblicherweise von dem elektronischen Motorsteuergerät via Datenleitung zur Verfügung gestellt. Hieraus wird bei Schritt S3 die von der Brennkraftmaschine abgegebene Leistung gemäß der Beziehung

$$P(i) = MM(i) \cdot nMOT(i) \cdot K$$

$$i = 1, 2...n$$

berechnet, worin K eine Konstante zur Umrechnung bedeutet. Im Schritt S4 wird aus zwei berechneten Leistungswerten der Energiedurchsatz gemäß der Beziehung

$$E = (P(i) + P(i+1)) \cdot dt$$

von zwei aufeinanderfolgenden Leistungswerten berechnet. Hierin bedeutet dt einen fest vorgegebenen Abfragetakt, z. B. 100 ms. Der Energiedurchsatz wird summmiert SUM(E). Bei Schritt S5 wird geprüft, ob die Summe des Energiedurchsatzes größer einem Grenzwert, z. B. 2,5 kWh, ist. Ist dies nicht der Fall, verzweigt das Programm zum Punkt B und fährt mit Schritt S2 fort. Wird bei Schritt S5 ermittelt, daß der Energiedurchsatz größer als der Grenzwert ist, d. h., die Brennkraftmaschine bzw. der Katalysator haben Betriebstemperatur erreicht, wird bei Schritt S6 in das Hauptprogramm zurückgekehrt.

Die erfindungsgemäße Lösung bietet den Vorteil, daß ohne Verschlechterung des Abgasverhaltens auf das Normalprogramm umgeschaltet werden kann. Unter Normalprogramm ist das vom Fahrer ausgewählte Schaltkennfeld zu verstehen. Bei sogenanntem intelligenten Schaltprogramm ist unter Normalprogramm dasjenige Schaltkennfeld zu verstehen, das die elektronische Getriebesteuerung aufgrund des Fahrerverhaltens, z. B. Fahraktivität, aus einer Mehrzahl von Schaltkennfeldern auswählt. Ein weiterer Vorteil des Systems besteht darin, daß bei normalem Straßenbetrieb ein deutlich höherer Energiedurchsatz stattfindet als im Abgastest, d. h. das Warmlaufprogramm kann wesentlich früher verlassen werden als bei rein zeitgesteuertem Warmlaufprogramm.

Bezugszeichen

| S1 | Abfrage Kaltstart-Bedingung |
|---|---|
| S2 | Einlesen |
| MM | Motormoment |
| nMOT | Brennkraftmaschine |
| S3 | Berechnung Leistung der Brennkraftmaschine |
| S4 | Berechnung Energiedurchsatz |
| S5 | Abfrage Energiedurchsatz > Grenzwert |
| S6 | Rückkehr in das Hauptprogramm |

**Patentansprüche**

1. Verfahren zur Steuerung eines von einer Brennkraftmaschine angetriebenen, elektrohydraulisch gesteuerten Automatgetriebes, bei dem eine elektronische Getriebesteuerung in Abhängigkeit von Eingangsgrößen aus mehreren Schaltkennfeldern selbsttätig eines auswählt und mit Erkennen einer Kaltstart-Bedingung ein Warmlaufschaltkennfeld auswählt oder nur diejenigen Schaltkennfelder mit höheren Schaltpunkten zuläßt, **dadurch gekennzeichnet, daß** die elektronische Getriebesteuerung aus dem von der Brennkraftmaschine abgegebenen Moment (MM) und dessen Drehzahl (nMOT) einen aktuellen Leistungswert (S3) berechnet (P(i) = MM(i) . nMOT(i) . K), i = 1, 2...n, K = konstant), einen Energiedurchsatz (E) berechnet (S4), indem die Leistungswerte (P(i)) über der Zeit summiert werden (E = (P(i) + P(i+1)) x dt) und die elektronische Getriebesteuerung (S5) das Warmlaufschaltkennfeld deaktiviert bzw. Schaltkennfelder mit niederen Schaltpunkten wieder zuläßt, wenn die Summe des Energiedurchsatzes (SUM(E)) einen Grenzwert (GW) überschreitet (SUM(E) > GW), wobei die Kaltstart-Bedingung dann vorliegt, wenn die Kühlwassertemperatur der Brennkraftmaschine (Theta (BKM)) kleiner einem Grenzwert (GW) ist (Theta (BKM) < GW) und/oder wenn die Temperatur des Hydraulikfluids des Automatgetriebes (Theta (ATF)) kleiner einem Grenzwert (GW) ist (Theta (ATF) < GW).

**Claims**

1. Method of controlling an electrohydraulically controlled automatic transmission driven by an internal combustion engine, whereby an electronic transmission control in dependence upon input parameters automatically selects one of a plurality of shift characteristic maps and on detection of a cold start condition selects a warm-up shift characteristic map or allows only shift characteristic maps with higher shifting points, **characterized in that** the electronic transmission control from the torque (MM) delivered by the i.c. engine and its rotational speed (nMOT) calculates (S3) an actual power value (P(i) = MM (i) . nMOT(i) . K), i = 1, 2 ... n, K = constant), calculates (S4) an energy throughput (E) by summing the power values (P(i)) over time (E = (P(i) + P(i+1)) x dt) and the electronic transmission control (S5) deactivates the warm-up shift characteristic map and/ or once more allows shift characteristic maps with lower shifting points when the sum of the energy throughput (SUM(E)) exceeds a limit value (GW) (SUM(E) > GW), wherein the cold start condition exists when the cooling water temperature of the i.c. engine (theta (BKM)) is lower than a limit value (GW) (theta (BKM) < GW) and/or when the temperature of the hydraulic fluid of the automatic transmission (theta (ATF)) is lower than a limit value (GW) (theta (ATF) < GW).

**Revendications**

1. Procédé pour commander une boîte de vitesses automatique entraînée par un moteur à combustion interne, à commande électro-hydraulique, dans laquelle une commande de boîte de vitesses électronique sélectionne automatiquement, en fonction de grandeurs d'entrée, l'un de plusieurs diagrammes caractéristiques de changement de rapport et, en réponse à la détection d'une condition de démarrage à froid, sélectionne un diagramme caractéristique de changement de rapport de marche à chaud, ou admet seulement les diagrammes caractéristiques de changement de rapport qui comportent des points de changement supérieurs, **caractérisé en ce que** la commande électronique de la boîte de vitesses calcule, sur la base du couple (MM) délivré par le moteur à combustion interne et de sa vitesse de rotation (nMOT), une valeur de puissance actuelle (S3), (P (i) = MM (i) . nMOT(i) . K), i = 1, 2... n, K = constante), calcule une transmission d'énergie (E) (S4), en additionnant les chiffres de puissance (P (i)) sur le temps, (E = (P (i) + (P (i+1)) x dt) et la commande électronique (S5) de la boîte de vitesses désactive le diagramme caractéristique de changement de rapport en marche à chaud ou admet de nouveau des diagrammes caractéristiques de changement de rapport comprenant des points de changement de rapport plus bas, lorsque la somme de la transmission d'énergie (SUM (E)) devient supérieure à une valeur limite (GW), (SUM (E) > GW), la condition de démarrage à froid étant présente lorsque la température de l'eau de refroidissement du moteur à combustion interne (Thêta (BKM)) est inférieure à une limite (GW), (Thêta (BKM) < GW) et/ou lorsque la température du fluide hydraulique de la boîte de vitesses automatique (Thêta (ATF)) est inférieure à une valeur limite (GW), (Thêta (ATF) < GW).

Ⓐ

S1

Kaltstart-
Bedingung?    nein

●B

Einlesen MM, nMOT    S2

Berechnung
BKM-Leistung    S3

Berechnung
Energiedurchsatz
(E)    S4

S5

nein    SUM(E)>GW ?

C●

Rückkehr ins
Hauptprogramm    S6

Fig. 1